# FASCICULE DE BREVET EUROPEEN

(11) **EP 3 093 238 B1**
(45) Date de publication et mention de la délivrance du brevet: **10.10.2018**
(21) Numéro de dépôt: 16163934.9
(22) Date de dépôt: 05.04.2016
(51) Int. Cl.: B64C 25/34, B64C 25/58, F16F 9/18, B64C 25/50

(54) **ATTERRISSEUR D'AERONEF MUNI DE MOYENS D'AMORTISSEMENT DE SHIMMY**
LANDEVORRICHTUNG FÜR LUFTFAHRZEUG, DIE MIT FLATTERDÄMPFUNGSMITTELN AUSGESTATTET IST
AN AIRCRAFT UNDERCARRIAGE WITH SHIMMY-DAMPING MEANS

(30) Priorité: 12.05.2015 FR 1554229
(43) Date de publication de la demande: 16.11.2016
(73) Titulaire: Safran Landing Systems, 78140 Vélizy-Villacoublay (FR)
(72) Inventeur: FRAVAL, Jérôme, 78140 VELIZY VILLACOUBLAY (FR); FRANK, David, 78140 VELIZY VILLACOUBLAY (FR)
(74) Mandataire: Parzy, Benjamin Alain

(56) Documents cités:
- EP-A1- 0 246 949
- GB-A- 555 500
- GB-A- 2 482 154
- US-A- 2 366 697
- US-A- 3 056 598

## Description

L'invention est relative à un atterrisseur d'aéronef muni de moyens d'amortissement de shimmy.

### ARRIERE-PLAN TECHNOLOGIQUE DE L'INVENTION

On connait des atterrisseurs comportant un caisson dans lequel une tige coulissante est montée à coulissement télescopique. L'extrémité inférieure de la tige coulissante porte un essieu ou un bogie pour recevoir une ou plusieurs roues. Des moyens de suspension sont formés entre le caisson et la tige coulissante pour absorber les chocs lors des atterrissages et suspendre l'aéronef lors du roulage de celui-ci.

En général, la tige est reliée au caisson par un compas dont les branches permettent le libre enfoncement de la tige dans le caisson tout en empêchant une rotation de la tige coulissante dans le caisson. Dans les atterrisseurs munis de moyens d'orientation des roues, les compas ne sont pas directement connectés au caisson, mais à un organe monté tournant sur le caisson (comme un collier externe monté tournant autour d'une partie basse du caisson, ou encore un tube tournant interne monté tournant à l'intérieur du caisson). La position angulaire de l'organe tournant est commandée par une commande d'orientation hydraulique ou électrique qui, par les compas, impose la position angulaire de la tige coulissante, et donc des roues.

On sait que les atterrisseurs sont sujets à des oscillations appelées shimmy, qui résultent notamment d'un couplage de modes de flexion et de torsion de l'atterrisseur. Ces oscillations fatiguent l'atterrisseur et peuvent conduire à des situations catastrophiques, en cas d'entrée en résonnance. Différents moyens d'amortissement de ces oscillations sont connus, comme par exemple la disposition de clapets anti-shimmy dans les commandes d'orientation hydrauliques, ou d'amortisseurs de shimmy sur l'articulation du compas.

Les documents EP 0 246 949 A1 et US 3 056 598 A divulguent un atterrisseur comprenant un caisson, une tige coulissante, un diaphragme, une aiguille de laminage et des moyens de liaison angulaire selon la revendication 1. Le document GB 2 482 154 A divulgue un atterrisseur comprenant un dispositif d'amortissement du shimmy passif.

### OBJET DE L'INVENTION

L'invention a pour objet de proposer un atterrisseur d'aéronef muni d'un système alternatif d'amortissement du shimmy purement passif.

### PRESENTATION DE L'INVENTION

En vue de la réalisation de ce but, on propose un atterrisseur d'aéronef comportant
- un caisson destiné à être relié à l'aéronef et définissant une cavité sensiblement cylindrique délimitée par une paroi supérieure et présentant une ouverture inférieure ;
- une tige coulissante engagée à coulissement étanche dans le caisson par l'ouverture inférieure, qui porte au moins une roue à son extrémité inférieure ;
- un diaphragme porté par un support accroché à la paroi supérieure du caisson pour coopérer à étanchéité avec une paroi interne de la tige coulissante, de sorte à définir une première chambre sous le diaphragme à l'intérieur de la tige entièrement remplie de fluide hydraulique, et une deuxième chambre au-dessus du diaphragme partiellement remplie de fluide hydraulique ;
- d'une portion remplie de fluide hydraulique de la deuxième chambre, en étant solidarisée à l'extrémité d'une aiguille de laminage solidaire de la tige coulissante et pénétrant dans un orifice calibré du diaphragme pour définir un passage calibré de fluide entre la première et la deuxième chambre ;
- des moyens de liaison angulaire pour imposer une position angulaire de la tige coulissante relativement au caisson.

Selon l'invention, l'atterrisseur comporte au moins une palette fixée à l'extrémité de l'aiguille de laminage de façon à s'étendre axialement le long du support à l'intérieur d'une portion remplie de fluide hydraulique de la deuxième chambre.

Ainsi, si des oscillations de torsion lors desquelles la tige coulissante oscille angulairement dans le caisson se développent, en raison notamment de la souplesse des moyens de liaison angulaire, la palette va se mettre à osciller angulairement dans le fluide hydraulique, ce qui va générer un couple résistant sur la palette contribuant à l'amortissement de ces oscillations, et contribuant à contrer une éventuelle tendance au shimmy de l'atterrisseur. Ce couple résistant, dû aux frottements visqueux générés par le déplacement angulaire de la palette dans le fluide, est généré automatiquement et de façon purement passive.

Pour les atterrisseurs dont les moyens de liaison angulaire entre la tige coulissante et le caisson incluent une commande d'orientation, cet amortissement est disponible même quand la commande d'orientation est inactive, par exemple à la suite d'une panne d'alimentation de la commande d'orientation.

De préférence, la palette comporte des bords qui s'étendent en regard d'une paroi interne du support pour présenter avec celle-ci un jeu réduit au moins quand les roues sont en position de roulage rectiligne de l'aéronef.

### BREVE DESCRIPTION DES FIGURES

L'invention sera mieux comprise à la lumière de la description qui suit d'un mode particulier de réalisation de l'invention, en référence aux figures des dessins annexés parmi lesquelles :
- la figure 1 est une vue en coupe schématique d'un atterrisseur d'aéronef selon l'invention ;
- la figure 2 est une vue en perspective partielle écorchée de l'atterrisseur de la figure 1 ;
- la figure 3 est une vue en coupe selon la ligne A-A de la figure 1 du support tubulaire de diaphragme et de la palette de l'atterrisseur de la figure 1 ;
- la figure 4 est une vue analogue à la figure 1 d'une variante de réalisation ne faisant pas partie de l'invention.

### DESCRIPTION DETAILLEE D'UN MODE DE REALISATION DE L'INVENTION

En référence aux figures, un atterrisseur d'aéronef typique comporte généralement un caisson 1 relié à la structure de l'aéronef et définissant une cavité cylindrique délimitée par une paroi supérieure 2, et présentant une ouverture à son extrémité inférieure. Une tige coulissante 3 est engagée à coulissement étanche dans le caisson 1 par son ouverture inférieure. Pour ce faire, le caisson 1 porte un palier inférieur 4 contre lequel coulisse une paroi externe de la tige coulissante 3, tandis que la tige coulissante 3 porte un palier supérieur 5 mobile qui coulisse contre une paroi interne du caisson 1. L'extrémité inférieure de la tige coulissante 3 porte ici deux roues 6. Par ailleurs, un diaphragme 7 est porté par un support 8 fixé à la paroi supérieure 2 du caisson 1. Le diaphragme 7 délimite dans la tige coulissante 3 une première chambre C1 remplie de fluide hydraulique. Une deuxième chambre C2 s'étendant dans la tige coulissante 3 et le caisson 1 par-dessus le diaphragme 7 est partiellement remplie de fluide hydraulique, le reste de la deuxième chambre C2 étant rempli de gaz sous pression. Une troisième chambre C3 remplie de fluide hydraulique s'étend entre la tige coulissante 3 et le caisson 1, entre les paliers 4 et 5. Un passage calibré (non représenté ici) est ménagé au niveau du palier supérieur 5 pour mettre en communication fluidique les chambres C2 et C3. Une aiguille de laminage 10 portée par un support d'aiguille 11 solidaire de la tige coulissante 3 s'étend au travers d'un orifice calibré 12 du diaphragme 7. De façon connue en soi, l'aiguille de laminage 10 comporte des rainures longilignes 13 de profondeur variable qui permettent de faire varier la section de passage de fluide entre les chambres C1 et C2 en fonction de l'enfoncement de la tige coulissante 3 dans le caisson 1.

De façon connue en soi, l'atterrisseur est équipé d'un dispositif de contrôle de la position angulaire de la tige coulissante 3 relativement au caisson 1, par exemple, un compas 14 dont les branches 14a et 14b articulées entre elles sont respectivement articulées à la tige coulissante 3 et au caisson 1. Dans les atterrisseurs à roues orientables, la branche supérieure 14b du compas n'est pas articulée directement sur le caisson 1, mais sur un organe pivotant monté tournant sur le caisson, comme un collier monté à rotation autour du caisson, ou un tube tournant monté à rotation à l'intérieur du caisson, et dont la position angulaire est commandée par une commande d'orientation. Tout ceci est bien connu et n'est rappelé que pour situer le cadre de l'invention.

Selon l'invention, une palette 20 est fixée à l'extrémité de l'aiguille de laminage 10 pour s'étendre à l'intérieur du support 8, dans une portion de la deuxième chambre C2 remplie de fluide hydraulique. Lors d'oscillations de torsion de l'atterrisseur lors desquelles la tige coulissante 3 oscille angulairement à l'intérieur du caisson 1, notamment en raison de la souplesse du compas 14, la palette 20 oscille angulairement dans le fluide hydraulique dans lequel elle baigne, ce qui génère sur la palette 20 un couple résistant dû aux frottements visqueux qui, par l'intermédiaire de l'aiguille de laminage 10, tend à amortir les oscillations angulaires de la tige coulissante 3 dans le caisson 1. On obtient ainsi un amortissement interne à l'atterrisseur, purement passif, disponible même si la commande d'orientation n'est pas active.

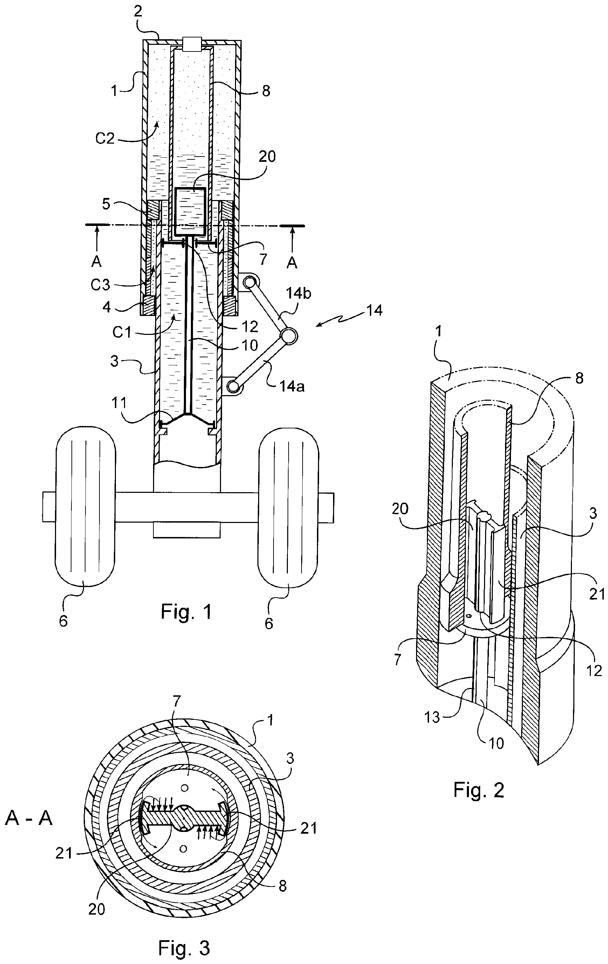

Selon un aspect particulier de l'invention illustré à la figure 3, lorsque les roues 6 (non-représentées en figure 3) sont en position de roulage rectiligne (ce qui est toujours le cas dans les atterrisseurs sans commande d'orientation, ou, pour les atterrisseurs à commande d'orientation, lorsque celle-ci est en position neutre), les bords 21 de la palette 20 s'étendent en regard d'une paroi interne du support 8 avec un jeu réduit adapté à procurer un amortissement plus important. De préférence, les bords 21 de la palette 20 sont en forme de secteur cylindrique dont la paroi externe s'étend en regard de la paroi interne du support 8 avec un jeu réduit.

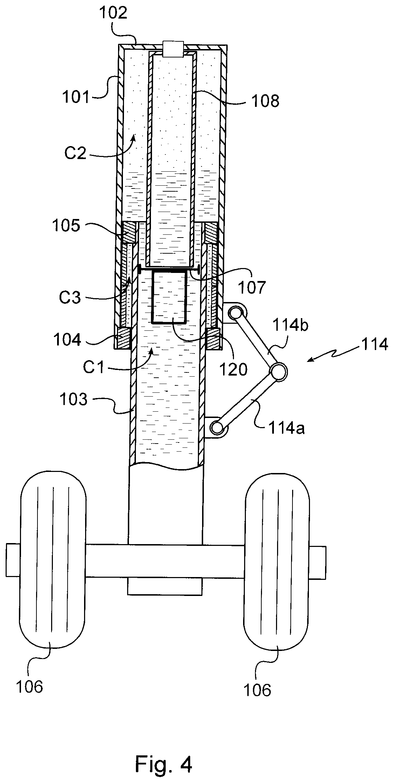

Selon une variante de réalisation ne faisant pas partie de l'invention illustrée à la figure 4, l'atterrisseur ne comporte pas d'aiguille de laminage, et la palette 120 est maintenant fixée au diaphragme 107 pour s'étendre dans la première chambre C1. De la même façon, lors d'oscillations de torsion de l'atterrisseur lors desquelles la tige coulissante 103 oscille angulairement à l'intérieur du caisson 101, notamment en raison de la souplesse du compas 114, la palette 120 oscille angulairement dans le fluide hydraulique dans lequel elle baigne, ce qui génère sur la palette 120 un couple résistant dû aux frottements visqueux qui, par l'intermédiaire de l'aiguille de laminage 110, tend à amortir les oscillations angulaires de la tige coulissante 103 dans le caisson 101. On obtient ainsi un amortissement interne à l'atterrisseur, purement passif, disponible même si la commande d'orientation n'est pas active.

## Revendications

1. Atterrisseur d'aéronef comportant
- un caisson (1) destiné à être relié à l'aéronef et définissant une cavité sensiblement cylindrique délimitée par une paroi supérieure (2) et présentant une ouverture inférieure ;
- une tige coulissante (3) engagée à coulissement étanche dans le caisson par l'ouverture inférieure, qui porte au moins une roue à son extrémité inférieure ;
- un diaphragme (7) porté par un support (8) accroché à la paroi supérieure du caisson pour coopérer à étanchéité avec une paroi interne de la tige coulissante, de sorte à définir une première chambre (C1) sous le diaphragme à l'intérieur de la tige entièrement remplie de fluide hydraulique, et une deuxième chambre (C2) au-dessus du diaphragme partiellement remplie de fluide hydraulique ;
- une aiguille de laminage (10) solidaire de la tige coulissante et pénétrant dans un orifice calibré (12) du diaphragme pour définir un passage calibré de fluide entre la première et la deuxième chambre ;
- des moyens de liaison angulaire pour imposer une position angulaire de la tige coulissante relativement au caisson ;
**caractérisé en ce que** l'atterrisseur comporte au moins une palette (20) fixée à l'extrémité de l'aiguille de laminage de façon à s'étendre axialement le long du support (8) à l'intérieur d'une portion remplie de fluide hydraulique de la deuxième chambre.

2. Atterrisseur selon la revendication 1, dans lequel la palette (20) comporte des bords (21) qui s'étendent en regard d'une paroi interne du support (8) avec un jeu réduit, au moins lorsque la roue de l'atterrisseur est en position de roulage rectiligne de l'aéronef.

3. Atterrisseur selon la revendication 2, dans lequel les bords (21) sont en forme de secteur cylindrique présentant une paroi externe qui s'étend avec un jeu réduit

## Patentansprüche

1. Luftfahrzeugfahrwerk, umfassend
- einen Kasten (1), der dazu bestimmt ist, mit dem Luftfahrzeug verbunden zu werden, und der einen im Wesentlichen zylindrischen Hohlraum definiert, der von einer oberen Wand (2) begrenzt ist und eine untere Öffnung aufweist;
- eine verschiebbare Stange (3), die über die untere Öffnung auf dichte Weise verschiebbar in den Kasten eingreift und die an ihrem unteren Ende mindestens ein Rad trägt;
- eine Membran (7), die von einem Träger (8) getragen wird, der an der oberen Wand des Kastens befestigt ist, um auf dichte Weise mit einer Innenwand der verschiebbaren Stange zusammenzuwirken, derart, dass eine erste Kammer (C1) unter der Membran im Inneren der Stange definiert wird, die vollständig mit Hydraulikfluid gefüllt ist, sowie eine zweite Kammer (C2) über der Membran, die teilweise mit Hydraulikfluid gefüllt ist;
- eine Drosselnadel (10), die mit der verschiebbaren Stange verbunden ist und in eine kalibrierte Öffnung (12) der Membran eindringt, um einen kalibrierten Fluiddurchgang zwischen der ersten und der zweiten Kammer zu definieren;
- Winkelverbindungsmittel, um der verschiebbaren Stange relativ zum Kasten eine Winkelposition aufzuerlegen;
**dadurch gekennzeichnet, dass** das Fahrwerk mindestens einen Flügel (20) umfasst, der am Ende der Drosselnadel derart befestigt ist, dass er sich axial entlang des Trägers (8) im Inneren eines mit Hydraulikfluid gefüllten Abschnittes der zweiten Kammer erstreckt.

2. Fahrwerk nach Anspruch 1, bei dem der Flügel (20) Ränder (21) umfasst, die sich gegenüber einer Innenwand des Trägers (8) mit einem verringerten Spiel erstrecken, zumindest wenn das Rad des Fahrwerks in der geradlinigen Rollposition des Flugzeugs ist.

3. Fahrwerk nach Anspruch 2, bei dem die Ränder (21) die Form eines zylindrischen Sektors haben, der eine Außenwand aufweist, die sich mit einem verringerten Spiel erstreckt.

## Claims

1. An aircraft undercarriage comprising:
• a strut (1) for connecting to the aircraft and defining a substantially cylindrical cavity closed by a top wall (2) and presenting a bottom opening;
• a slide rod (3) slidably engaged in leaktight manner in the strut via the bottom opening, which rod carries at least one wheel at its bottom end;
• a diaphragm (7) carried by a support (8) attached to the top wall of the strut to co-operate in leaktight manner with an inside wall of the slide rod so as to define a first chamber (C1) under the diaphragm inside the rod and completely filled with hydraulic fluid, and a second chamber (C2) above the diaphragm and partially filled with hydraulic fluid;
• a throttle needle (10) secured to the slide rod and penetrating into a calibrated orifice (12) in the diaphragm so as to define a calibrated fluid passage between the first and second chambers; and
• angular connection means for imposing an angular position on the slide rod relative to the strut;
**characterized in that** the undercarriage includes at least one vane (20) fastened to the end of the throttle needle in order to extend axially along the support (8) and inside a portion of the second chamber that is filled with hydraulic fluid.

2. An undercarriage according to claim 1, wherein the vane (20) has edges (21) that extend facing an inside wall of the support (8) with clearance that is small, at least when the wheel of the undercarriage is in position for the aircraft to taxi in a straight line.

3. An undercarriage according to claim 2, wherein the edges (21) are in the form of cylindrical sectors presenting an outside wall that extends with clearance that is small.
